# EUROPÄISCHE PATENTANMELDUNG

(11) **EP 3 587 217 A1**
(43) Veröffentlichungstag der Anmeldung: **01.01.2020**
(21) Anmeldenummer: 19182935.7
(22) Anmeldetag: 27.06.2019
(51) Int. Cl.: B62D 1/04

(54) **BEFESTIGUNGSSYSTEM FÜR ABDECKUNGSBAUTEILE EINES LENKRADS, LENKRAD SOWIE VERFAHREN ZUR HERSTELLUNG EINES LENKRADS**

(30) Priorität: 28.06.2018 DE 102018115568
(71) Anmelder: Dalphi Metal España, S.A., 36213 Vigo (ES)
(72) Erfinder: Baña Castro, Ramón, 36208 Vigo (ES); Graña Menduíña, Joaquín, 36209 Vigo (ES)
(74) Vertreter: ZF TRW Patentabteilung

(57) **Zusammenfassung**

Die Erfindung betrifft ein Befestigungssystem für Abdeckungsbauteile (20, 30) eines Lenkrads (10), wobei das Lenkrad (10) mindestens ein erstes Abdeckungsbauteil, insbesondere eine Vorderseiten-Abdeckung (20), und mindestens ein zweites Abdeckungsbauteil, insbesondere eine Rückseiten-Abdeckung (30), umfasst. Erfindungsgemäß weist das erste Abdeckungsbauteil, insbesondere die Vorderseiten-Abdeckung (20), mindestens einen Befestigungs-Clip (21) und das zweite Abdeckungsbauteil, insbesondere die Rückseiten-Abdeckung (30), mindestens einen Gegen-Clip (31) auf, wobei der Befestigungs-Clip (21) und der Gegen-Clip (31) eine Clip-Paarung (40) bilden und derart komplementär zueinander ausgebildet und auf den Abdeckungsbauteilen (20, 30) positioniert sind, dass die beiden Clips (21, 31) miteinander verbunden oder verbindbar sind.

## Beschreibung

Die Erfindung betrifft ein Befestigungssystem für Abdeckungsbauteile eines Lenkrads, wobei das Lenkrad mindestens ein erstes Abdeckungsbauteil, insbesondere eine Vorderseiten-Abdeckung, und mindestens ein zweites Abdeckungsbauteil, insbesondere eine Rückseiten-Abdeckung, umfasst, gemäß Oberbegriff des Patentanspruches 1. Ferner betrifft die Erfindung ein Lenkrad mit einem Lenkradskelett sowie mindestens einem ersten und einem zweiten Abdeckungsbauteil, gemäß Patentanspruch 8. Daneben betrifft die Erfindung ein Verfahren zum Herstellen eines Lenkrads.

Aus dem Stand der Technik ist es bekannt, einzelne Abdeckungsbauteile eines Lenkrads, insbesondere eine vorderseitige Verkleidung sowie eine rückseitige Abdeckung gesondert voneinander an einem Lenkradgrundkörper zu befestigen. Insbesondere ist es bekannt, Abdeckungsbauteile eines Lenkrades einzeln mit einem Lenkradgrundkörper, d.h. einem Lenkradskelett, zu verschrauben. Auch das Befestigen von Abdeckungsbauteilen an einem Schaumabschnitt des Lenkrades ist bekannt.

Das Verschrauben der einzelnen Abdeckungsbauteile hat zum einen den Nachteil, dass es sich dabei um einen relativ langwierigen Produktionsschritt handelt. Außerdem werden die Stücklistenkosten aufgrund der Verwendung von Schrauben erhöht.

Sofern die einzelnen Abdeckungsbauteile separat voneinander am Lenkradgrundkörper mittels eines Clips befestigt werden, besteht zum einen ein Nachteil darin, dass aufgrund der immer geringeren Abmaße von Lenkrädern der zur Verfügung stehende Platz hinsichtlich der Anbringung von Clips verringert wird. Um trotzdem eine ausreichende Befestigung der Abdeckungsbauteile zu ermöglichen ist es daher kompliziert, die notwendigen Befestigungspunkte zu lokalisieren.

Die Aufgabe der vorliegenden Erfindung ist es, ein weiterentwickeltes Befestigungssystem für Abdeckungsbauteile eines Lenkrads anzugeben. Insbesondere soll der dafür notwendige Platzbedarf im Zusammenhang mit dem Lenkrad minimiert werden.

Ferner besteht die Aufgabe darin, ein weiterentwickeltes Lenkrad sowie ein Verfahren zur Herstellung eines Lenkrads anzugeben.

Erfindungsgemäß wird diese Aufgabe im Hinblick auf das Befestigungssystem durch den Gegenstand des Anspruches 1, im Hinblick auf das Lenkrad durch den Gegenstand des Patentanspruches 8 und im Hinblick auf das Verfahren zur Herstellung eines Lenkrads durch den Gegenstand des Patentanspruches 9 gelöst.

Vorteilhafte und zweckmäßige Ausgestaltungen des erfindungsgemäßen Befestigungssystems sowie des erfindungsgemäßen Verfahrens zur Herstellung eines Lenkrads sind in den Unteransprüchen angegeben.

Das Befestigungssystem für Abdeckungsbauteile eines Lenkrades betrifft insbesondere ein Lenkrad, das mindestens ein erstes Abdeckungsbauteil, insbesondere eine Vorderseiten-Abdeckung, und mindestens ein zweites Abdeckungsbauteil, insbesondere eine Rückseiten-Abdeckung, umfasst.

Als Vorderseiten-Abdeckung ist vorzugsweise eine vorderseitige Verkleidung des Lenkrades zu verstehen. Als Rückseiten-Abdeckung ist eine rückseitige Abdeckung des Lenkrads zu verstehen. Als Vorderseite und Rückseite eines Lenkrades sind vorzugsweise die im Einbauzustand eines Lenkrads in einem Fahrzeug erkennbaren Seiten zu verstehen.

Als Vorderseite des Lenkrades ist die Seite des Lenkrades zu verstehen, die in Richtung des Fahrers weist. Eine Vorderseiten-Abdeckung eines Lenkrades umgreift beispielsweise eine Airbagmodul-Abdeckung.

Als Rückseite eines Lenkrads ist die zum Armaturenbrett eines Fahrzeugs weisende Seite eines Lenkrads zu verstehen.

Erfindungsgemäß weist das erste Abdeckungsbauteil, insbesondere die Vorderseiten-Abdeckung, mindestens einen Befestigungs-Clip auf. Das zweite Abdeckungsbauteil, insbesondere die Rückseiten-Abdeckung, weist mindestens einen Gegen-Clip auf. Der Befestigungs-Clip und der Gegen-Clip bilden eine Clip-Paarung und sind derart komplementär zueinander ausgebildet und auf den Abdeckungsbauteilen positioniert, dass die beiden Clips miteinander verbunden oder verbindbar sind.

Das Befestigungssystem basiert mit anderen Worten darauf, dass jedes der am Lenkrad zu befestigenden Bauteile, nämlich das erste Abdeckungsbauteil sowie das mindestens zweite Abdeckungsbauteil, jeweils einen Clip aufweisen, wobei die beiden Clips derart ausgebildet sind, dass diese eine Clip-Paarung bilden oder bilden können.

Aufgrund der erfindungsgemäßen Ausbildung des Befestigungssystems wird lediglich ein Platz zur Ausbildung und Anwendung von Befestigungselementen benötigt. Des Weiteren wird das Verfahren zur Herstellung des Lenkrads vereinfacht, da aufgrund einer vorangegangenen Positionierung mindestens eines Abdeckungsbauteils einem Monteur angezeigt wird, an welcher/welchen Position/en der/die Clip/s des zweiten Abdeckungsbauteils zu positionieren und einzuführen sind.

Der Befestigungs-Clip und der Gegen-Clip bilden vorzugsweise eine Rastverbindung und/oder eine Steckverbindung. Mit anderen Worten wird aufgrund des Ausbildens einer Clip-Paarung eine Rastverbindung und/oder eine Steckverbindung hergestellt.

Der Befestigungs-Clip und/oder der Gegen-Clip weist/weisen vorzugsweise zwei Stege und eine die Stege verbindende Rastnase auf. Bei einer derartigen Ausbildung des Befestigungs-Clips und/oder des Gegen-Clips handelt es sich um eine konstruktiv einfache Gestaltung.

Außerdem kann durch Ausbilden von zwei Stegen eine gewisse Elastizität und Rückstellkraft des Befestigungs-Clips und/oder des Gegen-Clips erzeugt werden, so dass zum einen das Einführen eines Clips in den anderen Clip vereinfacht wird. Zum anderen können aufgrund einer derartigen Ausbildung von Stegen beim Verbinden eines Abdeckungsbauteils mit dem weiteren Abdeckungsbauteil Fertigungstoleranzen ausgeglichen werden. Dies erleichtert somit das Verfahren zur Herstellung eines Lenkrads.

Vorzugsweise weisen beide Clips, d.h. der Befestigungs-Clip sowie der Gegen-Clip, jeweils eine Rastnase auf. Vorzugsweise liegt die Rastnase des Befestigungs-Clips im Befestigungszustand an der Rastnase des Gegen-Clips an. Aufgrund des Anliegens der beiden Rastnasen kann ein Verhaken bzw. Verrasten der Clips erzeugt werden, so dass die gebildete Clip-Paarung nicht oder nur äußerst schwierig zu trennen ist.

In einer bevorzugten Ausführungsform der Erfindung weist ein Clip der Clip-Paarung im Vergleich zum weiteren Clip größere Abmaße auf, so dass der weitere Clip in den Clip mit den größeren Abmaßen eingeführt oder einführbar ist.

In einer besonders bevorzugten Ausführungsform der Erfindung weist der Gegen-Clip, d.h. der Clip des zweiten Abdeckungsbauteils, insbesondere der Rückseiten-Abdeckung, größere Abmaße auf. Demnach ist es besonders bevorzugt vorgesehen, dass der Clip des ersten Abdeckungsbauteils, d.h. der Befestigungs-Clip der Vorderseiten-Abdeckung im Vergleich zum Gegen-Clip geringere Abmaße aufweist. In diesem Fall ist der Befestigungs-Clip in den Gegen-Clip eingeführt oder einführbar.

Es ist möglich, dass das erste Abdeckungsbauteil mehrere Befestigungs-Clips aufweist. Auch die Rückseiten-Abdeckung kann mehrere Gegen-Clips aufweisen. Insbesondere weisen die beiden Abdeckungsbauteile, d.h. die vorzugsweise ausgebildete Vorderseiten-Abdeckung sowie die Rückseiten-Abdeckung, eine gleiche Anzahl an Clips auf. In einer besonders bevorzugten Ausführungsform der Erfindung umfasst das Befestigungssystem zwei Befestigungs-Clips am ersten Abdeckungsbauteil sowie zwei Gegen-Clips am zweiten Abdeckungsbauteil.

Der Befestigungs-Clip oder der Gegen-Clip, insbesondere der Clip mit den im Vergleich zum weiteren Clip größeren Abmaßen, ist vorzugsweise mit einem weiteren Lenkradbauteil, insbesondere dem Lenkradskelett, verbunden. Bei dem Lenkradskelett handelt es sich um den Lenkradgrundkörper.

Demnach ist es aufgrund des erfindungsgemäßen Befestigungssystems möglich, ein Abdeckungsbauteil sowohl mit dem mindestens zweiten Abdeckungsbauteil und zusätzlich mit einem weiteren Lenkradbauteil zu verbinden.

Vorzugsweise umfasst das Befestigungssystem mindestens zwei Clip-Paarungen, wobei eine erste Clip-Paarung an einer 3-Uhr-Position des Lenkrads und eine zweite Clip-Paarung an einer 9-Uhr-Position des Lenkrads ausgebildet ist. Die 3-Uhr-Position sowie die 9-Uhr-Position ist bei einer Draufsicht auf die Vorderseiten-Abdeckung des Lenkrads ersichtlich.

Einer der beiden Clips, insbesondere der Clip mit den im Vergleich zum weiteren Clip größeren Abmaßen, weist vorzugsweise eine derartige Innenkontur auf, dass der weitere Clip mit den geringeren Abmaßen an dieser Innenkontur während des Befestigungs- bzw. Herstellungsvorgangs gleiten kann und im befestigten Zustand dort anliegt und eine Rastverbindung und/oder Steckverbindung bildet.

Insbesondere gleiten die Rastnase sowie die zwei Stege eines Clips, insbesondere des Befestigungs-Clips, an der Innenkontur des weiteren Clips, insbesondere des Gegen-Clips, entlang. Im befestigten Zustand liegt die Rastnase des Befestigungs-Clips an der Rastnase des Gegen-Clips an. Die zwei Stege des Befestigungs-Clips liegen vorzugsweise an der Innenkontur bzw. Innenseite der Stege des Gegen-Clips an.

Das erfindungsgemäße Befestigungssystem dient insbesondere zur Verbindung von zwei Kunststoffbauteilen. Vorzugsweise ist das erste Abdeckungsbauteil, insbesondere die Vorderseiten-Abdeckung, zumindest teilweise, vorzugsweise vollständig, aus Kunststoff gefertigt. Vorzugsweise ist das mindestens zweite Abdeckungsbauteil, insbesondere die Rückseiten-Abdeckung, zumindest teilweise, vorzugsweise vollständig, aus Kunststoff gefertigt.

Im Rahmen eines weiteren Aspekts beruht die Erfindung auf dem Gedanken, ein Lenkrad mit einem Lenkradskelett und mindestens einem ersten Abdeckungsbauteil, insbesondere einer Vorderseiten-Abdeckung, und mindestens einem zweiten Abdeckungsbauteil, insbesondere einer Rückseiten-Abdeckung, anzugeben, wobei die mindestens zwei Abdeckungsbauteile mit einem erfindungsgemäßen Befestigungssystem befestigt sind.

Bezüglich des erfindungsgemäßen Lenkrades ergeben sich die gleichen Vorteile, wie diese bereits im Zusammenhang mit dem erfindungsgemäßen Befestigungssystem beschrieben worden sind.

Ein weiterer Aspekt der Erfindung betrifft ein Verfahren zur Herstellung eines Lenkrads mit einem Lenkradskelett und mindestens zwei Abdeckungsbauteilen, insbesondere unter Verwendung eines erfindungsgemäßen Befestigungssystems. Das erfindungsgemäße Verfahren umfasst folgende Schritte:
a) Bereitstellen eines ersten Abdeckungsbauteils, insbesondere einer Vorderseiten-Abdeckung, mit mindestens einem ersten Clip, insbesondere mindestens einem Befestigungs-Clip,
b) Bereitstellen mindestens eines zweiten Abdeckungsbauteils, insbesondere einer Rückseiten-Abdeckung, mit mindestens einem zweiten Clip, insbesondere mindestens einem Gegen-Clip,
c) Verbinden des ersten Abdeckungsbauteils mit dem zweiten Abdeckungsbauteil durch Verbinden des ersten Clips mit dem zweiten Clip.

Die Verfahrensschritte a) und b), d.h. das Bereitstellen der mindestens zwei Abdeckungsbauteile, können in geänderter Reihenfolge durchgeführt werden. Beim Verfahrensschritt c) wird insbesondere einer der beiden Clips in den weiteren Clip eingeführt.

Vorzugsweise erfolgt im Schritt c) ein, insbesondere zeitgleiches, Verbinden des ersten Abdeckungsbauteils und/oder des zweiten Abdeckungsbauteils, insbesondere der Vorderseiten-Abdeckung, mit einem weiteren Lenkradbauteil, insbesondere einem Lenkradskelett.

In einer besonders bevorzugten Ausführungsform der Erfindung geht dem Schritt c) ein Befestigungsschritt voraus. In diesem vorausgehenden Schritt wird ein Abdeckungsbauteil, insbesondere die Rückseiten-Abdeckung, mit dem weiteren Lenkradbauteil, insbesondere dem Lenkradskelett, verbunden. Dabei wird der mindestens eine Clip der Rückseiten-Abdeckung, d.h. vorzugsweise der hinsichtlich den Abmaßen größer ausgebildete Gegen-Clip, am Lenkradskelett befestigt oder mit dem Lenkradskelett verbunden.

Anschließend kann das weitere Abdeckungsbauteil, d.h. vorzugsweise die Vorderseiten-Abdeckung, mit der Rückseiten-Abdeckung verbunden werden, wobei diesbezüglich zeitgleich die Verbindung des weiteren Abdeckungsbauteils, d.h. der Vorderseiten-Abdeckung, mit diesem weiteren Lenkradbauteil, insbesondere dem Lenkradskelett, erfolgt. Der mindestens eine Gegen-Clip dient somit zum einen zur Befestigung der beiden Abdeckungsbauteile aneinander sowie zur Befestigung eines der beiden Abdeckungsbauteile, insbesondere der Rückseiten-Abdeckung, am Lenkradskelett bzw. Lenkradgrundkörper.

Aufgrund des erfindungsgemäßen Verfahrens zur Herstellung eines Lenkrads können somit einzelne Verfahrensschritte, d.h. Herstellungsschritte übersprungen werden und im Schritt c) zeitgleich ein Verbinden mehrerer Bauteile des Lenkrads aneinander vorgenommen werden.

Die Erfindung wird im Folgenden anhand von Ausführungsbeispielen unter Bezugnahme auf die beigefügten Zeichnungen näher erläutert.

Darin zeigen:
- Fig. 1: eine perspektivische Ansicht einer Vorderseiten-Abdeckung eines Lenkrads mit einem zugehörigen Befestigungs-Clip;
- Fig. 2a und 2b: eine perspektivische Ansicht einer Rückseiten-Abdeckung sowie eines zugehörigen Gegen-Clips;
- Fig. 3a und 3b: eine perspektivische sowie eine Seitenansicht einer mit einer Rückseiten-Abdeckung verbundenen Vorderseiten-Abdeckung; und
- Fig. 4: eine Draufsicht auf eine Vorderseiten-Abdeckung in einem mit einer Rückseiten-Abdeckung sowie einem Lenkradskelett verbundenen Zustand.

Im Folgenden werden für gleiche und gleichwirkende Teile dieselben Bezugsziffern verwendet.

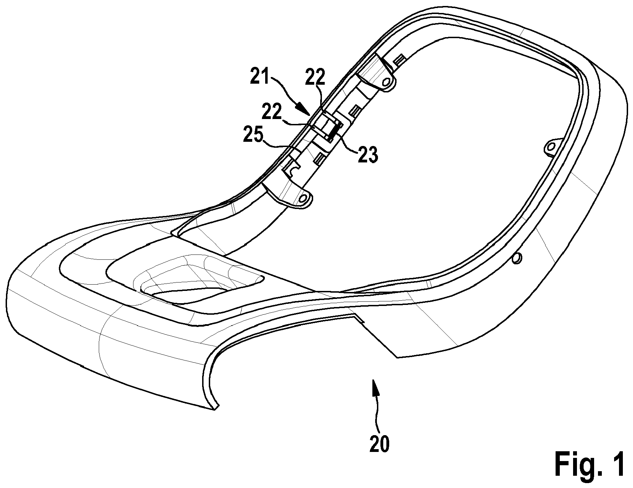

Fig. 1 zeigt eine Vorderseiten-Abdeckung 20 in einem nichtmontierten Zustand. Die Vorderseiten-Abdeckung 20 umfasst insbesondere ein Rahmensegment 25. An dem Rahmensegment 25 sind zwei Clips, nämlich zwei Befestigungs-Clips 21, ausgebildet. In der vorliegenden perspektivischen Darstellung ist lediglich ein Befestigungs-Clip 21 zu erkennen. Auf der gegenüberliegenden Seite des Rahmensegments 25 ist ein weiterer Befestigungs-Clip 21 ausgebildet. Der zweite Befestigungs-Clip 21 wird in der Darstellung gemäß Fig. 1 vom rechten Teil des Rahmensegments 25 verdeckt.

Der Befestigungs-Clip 21 besteht im vorliegenden Beispiel aus einer Rastnase 23 sowie zwei Stegen 22. Die Stege 22 sind mit dem Rahmensegment 25 verbunden. Vorzugsweise ist der Befestigungs-Clip 21, insbesondere die Stege 22, einteilig, d.h. monolithisch, mit dem Rahmensegment 25 ausgebildet.

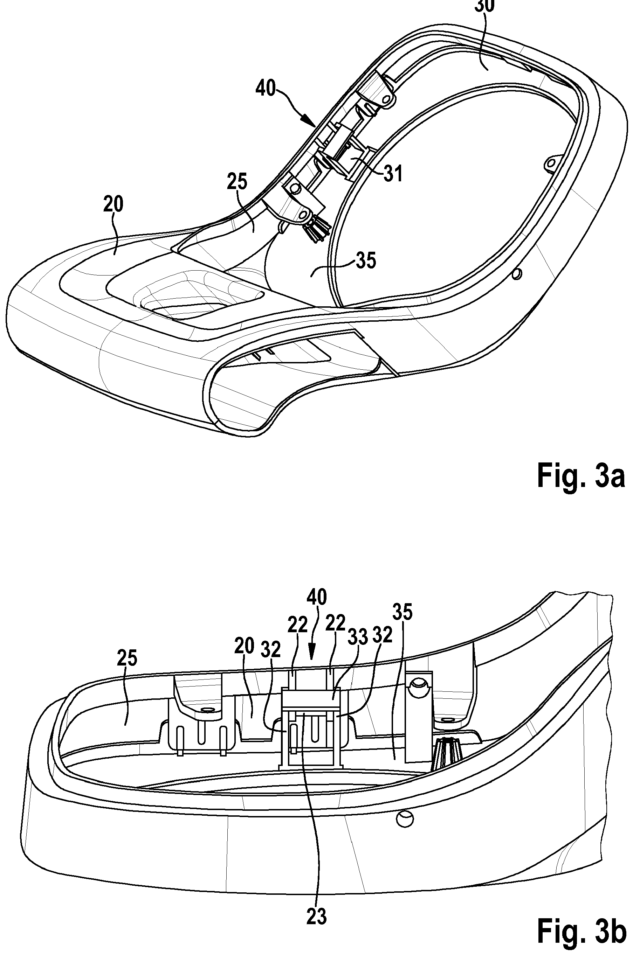

Bei der Vorderseiten-Abdeckung 20 handelt es sich insbesondere um ein Kunststoffbauteil, so dass die Vorderseiten-Abdeckung im Rahmen eines Kunststoff-Spritzvorgangs hergestellt sein kann. Die beiden Stege 22 sind an den vom Rahmensegment 25 gegenüberliegenden Enden mit der Rastnase 23 verbunden. Aufgrund der Ausbildung von Stegen 22 ist der Befestigungs-Clip 21 federnd ausgebildet, so dass der Befestigungsvorgang, insbesondere das Einführen des Befestigungs-Clips in einem Gegen-Clip (siehe hierzu Fig. 3a und 3b), erleichtert wird.

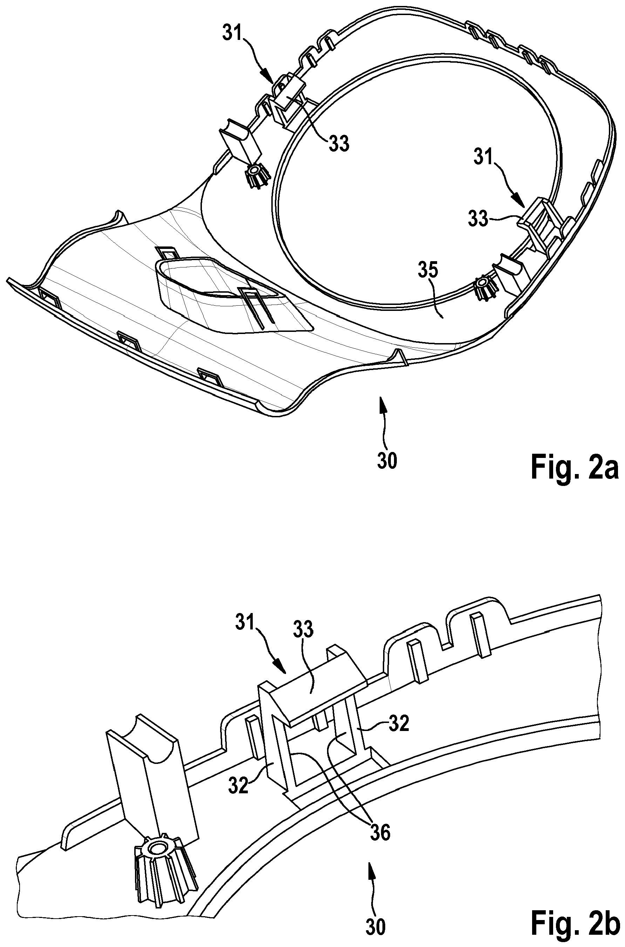

Fig. 2a zeigt eine Rückseiten-Abdeckung 30 in einer perspektivischen Ansicht. Die Rückseiten-Abdeckung 30 umfasst ebenfalls ein Rahmensegment 35. Die Rückseiten-Abdeckung 30 ist vorzugsweise aus Kunststoff gebildet, so dass die Rückseiten-Abdeckung 30 im Rahmen eines Kunststoff-Spritzvorgangs hergestellt werden kann.

An dem Rahmensegment 35 sind jeweils zwei Clips, nämlich zwei Gegen-Clips 31, ausgebildet. Die Gegen-Clips 31 stehen vom Rahmensegment 35, insbesondere im Wesentlichen senkrecht, ab. Die Gegen-Clips 31 bestehen aus zwei Stegen 32 sowie einer Rastnase 33. Die Gegen-Clips 31 sind komplementär zu den Befestigungs-Clips 21 ausgebildet. Dies betrifft sowohl die Positionierung der Gegen-Clips 31 an den Abdeckungsbauteilen als auch die Form der Gegen-Clips 31.

In Fig. 2b wird ein Gegen-Clip 31 in vergrößerter Darstellung gezeigt. Es ist zu erkennen, dass die Rastnase 33 schräg zu den Stegen 32 verläuft. Die Rastnase 33 verbindet die Stege 32. Die Rastnase 33 ist insbesondere nicht senkrecht zu den Stegen 32 ausgebildet. Aufgrund der schrägen Ausbildung bzw. schrägen Positionierung der Rastnase 33 kann die Rastnase 23 des Befestigungs-Clips 21 an der Rastnase 33 anliegen und einhaken.

Die Abmaße des Gegen-Clips 31 sind größer als die Abmaße des Befestigungs-Clips 21. Die Gegen-Clips 31 sind insbesondere derart ausgebildet, dass während des Einführvorgangs die Rastnase 23 sowie die Stege 22 des Befestigungs-Clips 21 an der Innenkontur des Gegen-Clips 31, insbesondere an der Innenseite 36 der Stege 32, entlang gleiten können. Insbesondere aufgrund der federnden Ausbildung des Befestigungs-Clips 21 kann der Befestigungs-Clip 21 zunächst einfach in den Gegen-Clip 31 eingeführt werden, wobei aufgrund der Rückstellkraft des Befestigungs-Clips 21 ein Verhaken des Steges 22 des Befestigungs-Clips 21 am Steg 32 des Gegen-Clips 31 erfolgt.

In den Fig. 3a und 3b sind die Clips 21 und 31 im verbundenen Zustand dargestellt. Der Befestigungs-Clip 21 und der Gegen-Clip 31 bilden eine Clip-Paarung 40. In den Fig. 3a und 3b ist sehr deutlich dargestellt, dass die Abmaße des Gegen-Clips 31 größer sind als die Abmaße des Befestigungs-Clips 21. Des Weiteren ist dargestellt, dass der Befestigungs-Clip 21 in den Gegen-Clip 31 eingeführt wird.

Es ist außerdem zu erkennen, dass der Befestigungs-Clip 21 nahe am Rahmensegment 25 anliegt, so dass eine ungewollte Trennung der Clip-Paarung 40 vermieden wird. Der Gegen-Clip 31 steht hingegen im Wesentlichen senkrecht vom Rahmensegment 35 ab.

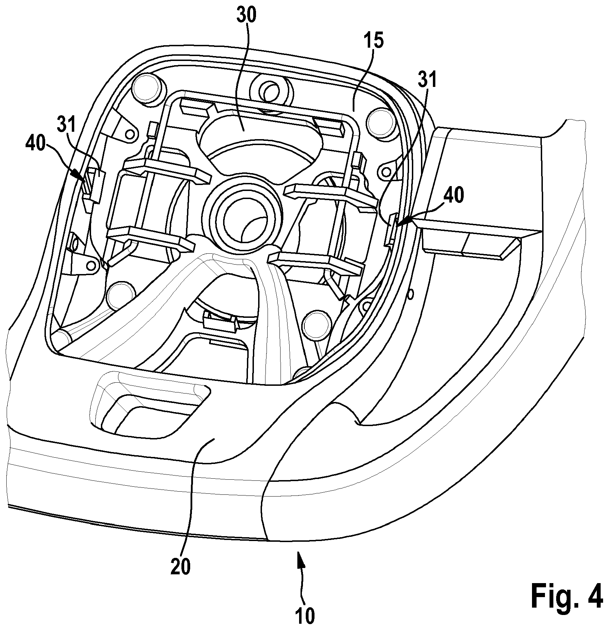

In Fig. 4 ist die Vorderseiten-Abdeckung 20 im am Lenkrad 10 befestigten Zustand dargestellt. Es ist zu erkennen, dass die Rückseiten-Abdeckung 30 am Lenkradskelett 15 befestigt ist. Hierzu dienen die Gegen-Clips 31. In diesem verbundenen Zustand, d.h. in dem Zustand, in dem die Gegen-Clips 31 der Rückseiten-Abdeckung 30 in das Lenkradskelett 15 eingeführt und mit diesem verbunden sind, kann die Vorderseiten-Abdeckung 20 mit der Rückseiten-Abdeckung 30 und somit mit dem Lenkradskelett 15 verbunden werden. Für diese Verbindung sind lediglich die beiden Clip-Paarungen 40 notwendig.

Eine erste Clip-Paarung 40, nämlich die in Fig. 4 links dargestellte Clip-Paarung, ist in einer 9-Uhr-Position des Lenkrads 10 ausgebildet. Eine zweite Clip-Paarung 40, nämlich die in Fig. 4 rechts dargestellte Clip-Paarung, ist in einer 3-Uhr-Position des Lenkrads 10 ausgebildet. Die 3-Uhr-Position bzw. die 9-Uhr-Position sind in einem eingebauten und nicht betätigten Zustand des Lenkrads 10 bzw. in einer diesem Zustand entsprechenden Positionierung des Lenkrads 10 zu erkennen.

Es ist somit erfindungsgemäß möglich, die Anzahl von Clips zu verringern, wobei gleichzeitig die verwendeten Clips zur Verbindung von in diesem Fall drei Lenkradbauteilen, nämlich der Vorderseiten-Abdeckung, der Rückseiten-Abdeckung sowie dem Lenkradskelett an jeweils übereinstimmenden Positionen durchgeführt wird. Demzufolge können die geringeren Einbaumöglichkeiten im Zusammenhang mit einem Lenkradkorpus effizienter genutzt werden.

### Bezugszeichen

- 10: Lenkrad
- 15: Lenkradskelett
- 20: Vorderseiten-Abdeckung
- 21: Befestigungs-Clip
- 22: Steg
- 23: Rastnase
- 25: Rahmensegment
- 30: Rückseiten-Abdeckung
- 31: Gegen-Clip
- 32: Steg
- 33: Rastnase
- 35: Rahmensegment
- 36: Innenseite Steg
- 40: Clip-Paarung

## Patentansprüche

1. Befestigungssystem für Abdeckungsbauteile (20, 30) eines Lenkrads (10), wobei das Lenkrad (10) mindestens ein erstes Abdeckungsbauteil, insbesondere eine Vorderseiten-Abdeckung (20), und mindestens ein zweites Abdeckungsbauteil, insbesondere eine Rückseiten-Abdeckung (30), umfasst,
**dadurch gekennzeichnet, dass**
das erste Abdeckungsbauteil, insbesondere die Vorderseiten-Abdeckung (20), mindestens einen Befestigungs-Clip (21) und das zweite Abdeckungsbauteil, insbesondere die Rückseiten-Abdeckung (30), mindestens einen Gegen-Clip (31) aufweist, wobei der Befestigungs-Clip (21) und der Gegen-Clip (31) eine Clip-Paarung (40) bilden und derart komplementär zueinander ausgebildet und auf den Abdeckungsbauteilen (20, 30) positioniert sind, dass die beiden Clips (21, 31) miteinander verbunden oder verbindbar sind.

2. Befestigungssystem nach Anspruch 1,
**dadurch gekennzeichnet, dass**
der Befestigungs-Clip (21) und der Gegen-Clip (31) eine Rastverbindung und/oder Steckverbindung bilden.

3. Befestigungssystem nach Anspruch 1 oder 2
**dadurch gekennzeichnet, dass**
der Befestigungs-Clip (21) und/oder der Gegen-Clip (31) zwei Stege (22, 32) und eine die Stege (22, 32) verbindende Rastnase (23, 33) aufweist/aufweisen.

4. Befestigungssystem nach Anspruch 3,
**dadurch gekennzeichnet, dass**
die Rastnase (23) des Befestigungs-Clips (21) an der Rastnase (33) des Gegen-Clips (31) anliegt.

5. Befestigungssystem nach einem der Ansprüche 1 bis 4,
**dadurch gekennzeichnet, dass**
ein Clip (31) der Clip-Paarung (40) im Vergleich zum weiteren Clip (21) größere Abmaße aufweist, sodass der weitere Clip (21) in den Clip (31) mit den größeren Abmaßen eingeführt oder einführbar ist.

6. Befestigungssystem nach einem der vorangegangenen Ansprüche, insbesondere nach Anspruch 5,
**dadurch gekennzeichnet, dass**
der Befestigungs-Clip (21) oder der Gegen-Clip (31), insbesondere der Clip (31) mit den im Vergleich zum weiteren Clip (21) größeren Abmaßen, mit einem weiteren Lenkradbauteil, insbesondere dem Lenkradskelett (15), verbunden ist.

7. Befestigungssystem nach einem der vorangegangenen Ansprüche,
**gekennzeichnet durch**
die Ausbildung von mindestens zwei Clip-Paarungen (40), wobei eine erste Clip-Paarung (40) an einer 3-Uhr-Position des Lenkrads (10) und eine zweite Clip-Paarung (40) an einer 9-Uhr-Position des Lenkrads (10) ausgebildet ist.

8. Lenkrad (10) mit einem Lenkradskelett (15) und mindestens einem ersten Abdeckungsbauteil, insbesondere einer Vorderseiten-Abdeckung (20), und mindestens einem zweiten Abdeckungsbauteil, insbesondere einer Rückseiten-Abdeckung (30), wobei die mindestens zwei Abdeckungsbauteile (20, 30) mit einem Befestigungssystem nach einem der Ansprüche 1 bis 7 befestigt sind.

9. Verfahren zur Herstellung eines Lenkrads (10) mit einem Lenkradskelett (15) und Abdeckungsbauteilen (20, 30), insbesondere unter Verwendung eines Befestigungssystems nach einem der Ansprüche 1 bis 7, umfassend folgende Schritte:
a) Bereitstellen eines ersten Abdeckungsbauteils, insbesondere einer Vorderseiten-Abdeckung (20), mit mindestens einem ersten Clip, insbesondere mindestens einem Befestigungs-Clip (21),
b) Bereitstellen mindestens eines zweiten Abdeckungsbauteils, insbesondere einer Rückseiten-Abdeckung (30), mit mindestens einem zweiten Clip, insbesondere mindestens einem Gegen-Clip (31),
c) Verbinden des ersten Abdeckungsbauteils mit dem zweiten Abdeckungsbauteil durch Verbinden des ersten Clips mit dem zweiten Clip.

10. Verfahren nach Anspruch 9,
**dadurch gekennzeichnet, dass**
im Schritt c) ein, insbesondere zeitgleiches, Verbinden des ersten Abdeckungsbauteils und/oder des zweiten Abdeckungsbauteils, insbesondere der Vorderseiten-Abdeckung (20), mit einem weiteren Lenkradbauteil, insbesondere einem Lenkradskelett (15), erfolgt.
